# EUROPEAN PATENT APPLICATION

(11) **EP 1 403 941 A2**
(43) Date of publication of application: **31.03.2004**
(21) Application number: 03253190.7
(22) Date of filing: 21.05.2003
(51) Int. Cl.: H01M 2/08, H01G 9/00

(54) **Energy storage element and method of fabricating same**

(30) Priority: 14.06.2002 JP 2002174590
(71) Applicant: NEC TOKIN Corporation, Sendai-shi, Miyagi (JP)
(72) Inventor: Nishiyama, Toshihiko, Nec Tokin Corporation, Sendai-shi, Miyagi (JP); Kamisuki, Hiroyuki, Nec Tokin Corporation, Sendai-shi, Miyagi (JP); Mitani, Masaya, Nec Tokin Corporation, Sendai-shi, Miyagi (JP); Nobuta, Tomoki, Nec Tokin Corporation, Sendai-shi, Miyagi (JP); Kaneko, Shinako, Nec Tokin Corporation, Sendai-shi, Miyagi (JP); Kurosaki, Masato, Nec Corporation, Tokyo (JP); Nakagawa, Yuji, Nec Corporation, Tokyo (JP)
(74) Representative: W.P. THOMPSON & CO.

(57) **Abstract**

The present invention provides for gaskets in a storage element such as a battery or an electric double-layer capacitor of a multiple-layer construction composed of a plurality of layers having holes of different inside dimensions wherein the upper-layer gaskets have holes with an inside diameter that is the same size as the outside diameter of the solid electrodes, and the lower-layer gaskets have holes with an inside diameter that is larger than the outside diameter of the solid electrodes. The electrodes are each closely fitted within the holes of the upper-layer gaskets and, as a result, are firmly secured and prevented from shifting and the fusion surface area of the upper-layer gaskets that are bonded together is increased. The existence of spaces for holding electrolytic solution between the inside diameter of the holes of the lower-layer gaskets and the outside diameter of the solid electrodes increases the amount of internal electrolytic solution that can be held.

## Description

The present invention relates to a storage element of a device such as a battery or an electric double-layer capacitor and to a method of fabricating the storage element, and more particularly to the structure of a gasket of a storage element.

Recent years have seen great progress in the reduction of the size and weight of portable devices in the field of information communication. There has been a corresponding advance in the reduction of the size and weight of secondary batteries and electric double-layer capacitors, and batteries or double-layer capacitors that employ a metal laminate or coin-shaped metal cases as an exterior material are now being manufactured. In the method of manufacturing these components, the two electrodes must be fixed at prescribed positions inside the exterior materials and then held in an accurate mutually confronting relationship.

In the prior art, several methods have been proposed for securing the two electrodes at prescribed positions and arranging the electrodes in a mutually confronting relation. For example, a method is disclosed in Japanese Patent Laid-Open No. 273701/96 relating to a secondary battery having a metal case. This method employs an electrode plate having a metal ring that is secured as a single unit to its circumference, this metal ring being welded inside a coin-shaped metal case to secure the two electrode plates at prescribed positions inside the metal case. Nevertheless, this method is problematic because the interposition of a metal ring between the electrode plates and the metal case interferes with the retention of sufficient electrolytic solution between the electrode plates and metal case, and moreover, increases the weight of the product and thus hinders the reduction of weight of the product.

The present invention seeks to provide for a storage element and related method of fabrication having advantages over known such elements and methods.

The storage element of the present invention can advantageously include gaskets of a multi-layer construction that are each composed of a plurality of layers having holes of different dimensions that are linked together, an upper-layer (separator-side) gasket having a hole with an inside dimension that is equal to the outside dimension of a solid electrode, and a lower-layer (collector plate-side) gasket having a hole with an inside dimension that is larger than the outside dimension of the solid electrode. Forming the gaskets from a plurality of layers having holes of different dimensions can prevent shifting of the position of the electrodes, can allow retention of an ample amount of electrolytic solution, and can prevent defective sealing without changing the volume of the entire fabricated product.

The invention is advantageous in providing a storage element such as a second battery or an electric double-layer capacitor and a method of fabricating the storage element, this storage element being advantageously capable of reducing ESR (Equivalent Series Resistance) by preventing shifting of the position of the electrodes; and moreover, being capable of preventing defective sealing by both increasing the fusing area of the confronting gaskets and holding an ample quantity of electrolytic solution inside.

In particular, the present invention can provide for a storage element in which: a pair of gaskets, which have holes through which solid electrodes are inserted and held such that one surface of each of the solid electrodes contacts a respective collector plate, are arranged such that the other surfaces of the solid electrodes are arranged to confront each other through an interposed separator, wherein the inside dimension of the holes in the gaskets on the separator side are smaller than the inside dimension of the holes in the gaskets on the collector plate side.

In the present invention, the inside dimension of the holes in the gaskets on the separator side is preferably substantially the same size as the outside dimension of the solid electrodes.

In addition, the gaskets of the present invention are preferably of a two-layer construction in which a separator-side gasket and a collector plate-side gasket are laminated to produce a single unit.

The invention can advantageously also provide for a method of fabricating a storage element such as a battery or an electric double-layer capacitor in which a pair of gaskets, which have holes in which solid electrodes are inserted and held such that one surface of each of the solid electrodes contacts a respective collector plate, are arranged such that the other surfaces of the solid electrodes confront each other through an interposed separator: an upper-layer (separator-side) gasket, which has a hole with an inside dimension having the same size as the outside dimension of the solid electrodes, and a lower-layer (collector plate-side) gasket, which has a hole with an inside dimension that is larger than the outside dimension of the solid electrodes, are laminated together to form a single unit such that the holes are linked together to form a gasket of multi-layer structure.

The present invention not only advantageously prevents shifting of the position of the electrodes, but, by enlarging a portion of the inside diameter of the gasket, can also increase the amount of electrolytic solution that can be held and thus enable a reduction of ESR.

The invention is described further hereinafter, by way of example only, with reference to the accompanying drawings in which:
FIG. 1 is a sectional view that gives a schematic representation of the inside structure of a basic cell of a storage element embodying the present invention;
FIGs. 2A-2D are sectional views giving a schematic representation of a method of fabricating a storage element embodying the present invention;
FIGS. 3A-3B are sectional views giving a schematic representation of the steps of forming the gaskets of a storage element embodying the present invention; and
FIG. 4 is a sectional view giving a schematic view of a basic cell of a comparative example of a storage element.

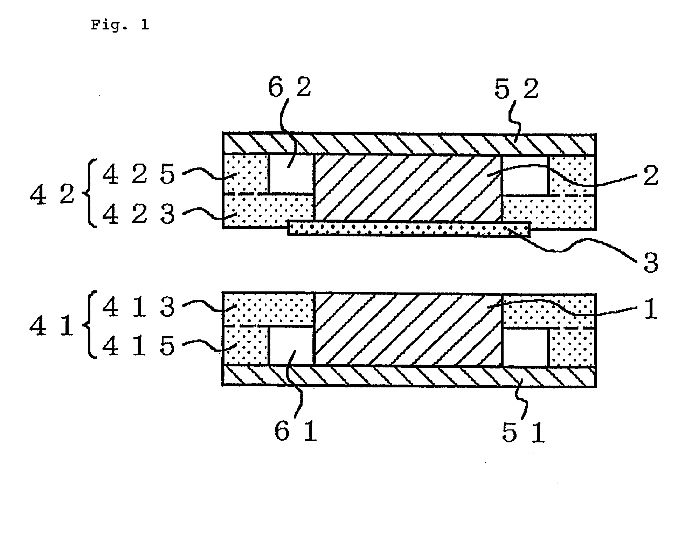

FIG. 1 is a sectional view showing the internal construction of a basic cell of a storage element of the present invention. This basic cell is made up from: solid electrodes 1 and 2; separator 3 of micro porous structure that is positioned between electrodes 1 and 2; gasket 41 for holding electrode 1 and gasket 42 for holding electrode 2; and collector plates 51 and 52 that are each arranged on the outer side, i.e., the side opposite separator 3, of the two electrodes 1 and 2, respectively. When this storage element is a battery, the two electrodes 1 and 2 function as a negative electrode and a positive electrode, and when the storage element forms an electric double-layer capacitor, electrodes 1 and 2 are both polarized electrodes. In the present embodiment and each of the working examples that are described hereinbelow, electrodes 1 and 2, separator 3, collector plates 51 and 52, and gaskets 41 and 42 are all shaped as cylinders or as discs; and gaskets 41 and 42 have holes which are cylindrical in form and that pass through the gaskets.

To describe gasket 41 on the negative electrode side in more detail, this gasket 41 is of a two-layer construction made up by separator-side gasket 413 that is located on the side of separator 3 and collector plate-side gasket 415 that is located on the side of collector plate 51. The inside diameter of the hole in separator-side gasket 413 is selected to be substantially identical to the outside diameter of one electrode (for example, the negative electrode) 1, and moreover, smaller than the outside diameter of separator 3, so as to enable retention of electrode 1. On the other hand, the inside diameter of the hole in collector plate-side gasket 415 is selected to be larger than the outside diameter of electrode 1, and moreover, smaller than the outside diameter of collector plate 51 so as to secure electrolytic solution holding space 61 that can hold electrolytic solution between electrode 1 and collector plate-side gasket 415.

The construction of positive-side gasket 42 is identical to the construction of negative-side gasket 41. In other words, this gasket 42 is a two-layer construction made up by separator-side gasket 423 that is located on the side of separator 3 and collector plate-side gasket 425 that is located on the side of collector plate 52. The inside diameter of the hole in separator-side gasket 423 is selected to be substantially identical to the outside diameter of the other electrode (for example, the positive electrode) 2, and moreover, smaller than the outside diameter of separator 3, so as to enable retention of electrode 2. On the other hand, the inside diameter of the hole in collector plate-side gasket 425 is selected to be larger than the outside diameter of electrode 2 and moreover, smaller than the outside diameter of collector plate 52 so as to secure electrolytic solution holding space 62 that can hold electrolytic solution between electrode 2 and collector plate-side gasket 425.

Explanation next regards the method of fabricating this storage element. First, negative electrode-side gasket 41 and positive electrode-side gasket 42 are each bonded by thermal fusion to collector plates 51 and 52 that are composed of a material such as conductive rubber as shown in FIG. 2A, and electrolytic solution is injected into the resulting interior space. Obviously injection of electrolytic solution into gasket 42 on the side of the positive electrode is performed with the collector plate 52 positioned at the bottom, in contrast to the state shown in FIG. 1. In addition, the amount of electrolytic solution that is injected is an amount such that electrolytic solution will not leak when electrodes 1 and 2 are mounted or when gaskets 41 and 42 are laminated together.

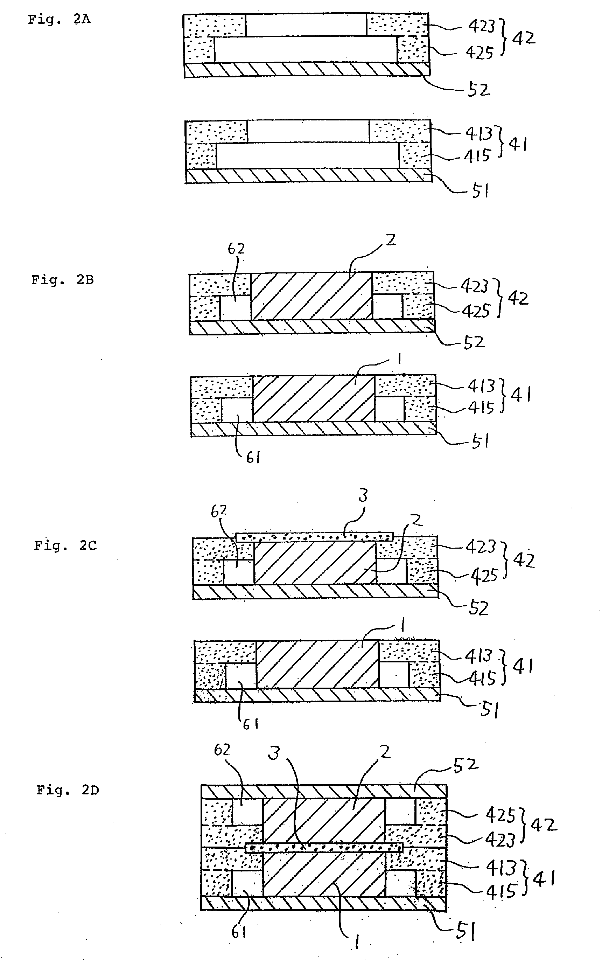

Electrodes 1 and 2 that are impregnated with electrolytic solution are next mounted in gaskets 41 and 42, respectively, as shown in FIG. 2B. Next, as shown in FIG. 2C, separator 3 is then bonded by thermocompression bonding to one of gaskets (positive electrode side gasket 42 in the example shown in the figure), thereby producing a sealed construction from which electrode 2 will not fall even when the construction is turned upside down. The gasket that has thus been formed as a sealed structure (positive-side gasket 42 in the example shown in the figure) is then arranged to confront the other gasket (negative-side gasket 41 in the example shown in the figure) with separator 3 interposed, as shown in FIG. 2D, and negative electrode-side gasket 41 and positive electrode-side gasket 42 are then bonded together by thermal fusion, thereby completing a basic cell of the storage element.

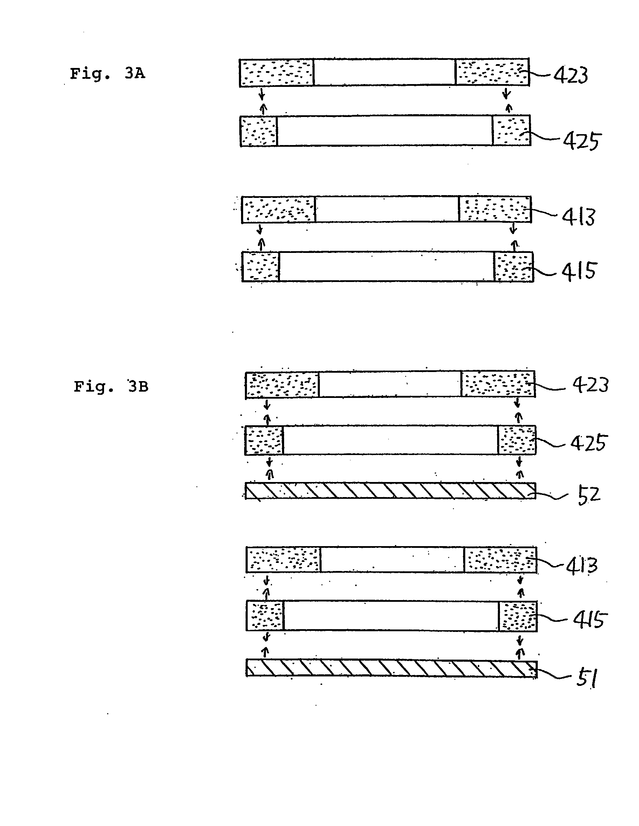

Each of gaskets 41 and 42 of the two-layer construction may also be formed as single units in advance by stacking separator-side gaskets 413 and 423 and collector plate-side gaskets 415 and 425 that have holes with different inside diameters as shown in FIG. 3A and then bonding by thermocompression bonding. Alternatively, separator-side gaskets 413 and 423 and collector plate-side gaskets 415 and 425 may also be unified at the same time they are bonded by thermal fusion with collector plates 51 and 52, as shown in FIG. 3B. Ionomer is suggested as one suitable material for gaskets 41 and 42 of the present invention.

According to the storage element of the present invention, electrodes 1 and 2 (negative electrode and positive electrode when storage element is a battery, or two polarized electrodes when the storage element is an electric double-layer capacitor) are held by gaskets 41 and 42 without any shift in position. In addition, electrolytic solution holding spaces 61 and 62 are secured, whereby, even if electrolytic solution should leak from electrodes 1 and 2 that come under compression not only during the assembly of a basic cell but also when stacking a plurality of basic cells, the electrolytic solution can be kept in electrolytic solution holding spaces 61 and 62 and thus prevented from leaking from the basic cell.

The present invention has two chief merits. One merit is the reduction of ESR that is obtained by preventing shifting of the position of the electrodes. The other merit is the prevention of defective sealing obtained both by increasing the amount of electrolytic solution that is retained inside the basic cell as well as by increasing the surface area of fusion between the gaskets.

The first effect, i.e., the reduction of ESR, can be realized because gaskets 41 and 42 are constructed from separator-side gaskets 413 and 423 and collector plate-side gaskets 415 and 425 that have holes of differing inside diameters. Upper-layer (separator-side) gaskets 413 and 423 have holes having an inside diameter equal to the size of the outside diameter of electrodes 1 and 2, and lower-layer (collector plate-side) gaskets 415 and 425 have holes having an inside diameter that is larger than the inside diameter of the holes of upper-layer gaskets 413 and 423. The inside diameter of the holes of upper-layer gaskets 413 and 423 is the same size as the outside diameter of solid electrodes 1 and 2, whereby shifting of the positions of electrodes 1 and 2 can be prevented, and ESR is consequently reduced. In addition, electrolytic solution can be saved in electrolytic solution holding spaces 61 and 62 between lower-layer gaskets 415 and 425 and electrodes 1 and 2. Furthermore, the smaller inside diameter of the holes in upper-layer gaskets 413 and 423 can suppress the evaporation of the electrolytic solution that is present in electrolytic solution holding spaces 61 and 62 between lower-layer gaskets 415 and 425 and electrodes 1 and 2. As a result, an ample amount of electrolytic solution can be retained inside a basic cell, and an increase in ESR that is brought about by a reduction in the amount of electrolytic solution can thus be prevented.

The second merit, i.e., the prevention of defective sealing, can be realized because the smaller inside diameter of the holes in upper-layer gaskets 413 and 423 increases the surface area of fusion when the two upper-layer gaskets 413 and 423 are bonded together; and further, because the inside diameter of the holes in lower-layer gaskets 415 and 425 is greater than the outside diameter of solid electrodes 1 and 2, whereby electrolytic solution can be held inside electrolytic solution holding spaces 61 and 62 between the lower-layer gaskets 415 and 425 and electrodes 1 and 2 and the adherence of electrolytic solution to the portions of fusion between upper-layer gaskets 413 and 423 can be eliminated.

Explanation next regards actual working examples of the storage element of the present invention. In the first working example, an ionomer was used as the material of gaskets 41 and 42. As separator-side gaskets 413 and 423 of the two-layer construction of the gaskets, a ring-shaped sheet having a thickness of 150 µm, a hole inside diameter of 13.0 mm, and an outside diameter of 16.0 mm was employed. As collector plate-side gaskets 415 and 425, a ring-shaped sheet having a thickness of 150 µm, a hole inside diameter of 14.0 mm, and an outside diameter of 16.0 mm was used.

Electrode 1, which was the negative electrode, was formed from a negative electrode active material, a conductive supplement, and a binder resin. Polyquinoxaline, which was the negative electrode active material, gas-phase epitaxial carbon, which was the conductive supplement, and polyvinylidene fluoride (having an average molecular weight of 1100), which was the binder resin, were mixed by churning in an automatic mortar for three hours in weight proportions of 75 : 20 : 5. Electrode 1, which was obtained by measuring 50 mg of powder that was obtained by this process and then pressure-forming in the shape of a cylinder having a diameter of 13 mm, was used as the negative electrode.

Electrode 2, which was the positive electrode, was composed of a positive electrode active material, a conductive supplement, and a binder resin. Polycyanoindole, which was the positive electrode active material, gas-phase epitaxial carbon, which was the conductive supplement, and polyvinylidene fluoride (having an average molecular weight of 1100), which was the binder resin, were mixed together by churning in an automatic mortar for three hours in weight proportions of 75 : 20 : 5. Electrode 2, which was formed by measuring 50 mg of the thus-obtained powder and then pressure forming in a cylindrical shape having a diameter of 13 mm, was used as the positive electrode.

A porous polyfilm of polyethylene was used as separator 3, and a 40% sulfuric acid aqueous solution was used as the electrolytic solution.

Using these materials, 1000 polymer batteries were fabricated in accordance with the above-described fabrication method, following which the number of sealing defects was counted, and the ESR was measured for each storage element without sealing defects. As shown in Table 1, the results show that no sealing defect occurred in 1000 samples, and an average value of ESR was 3.2 Ω.

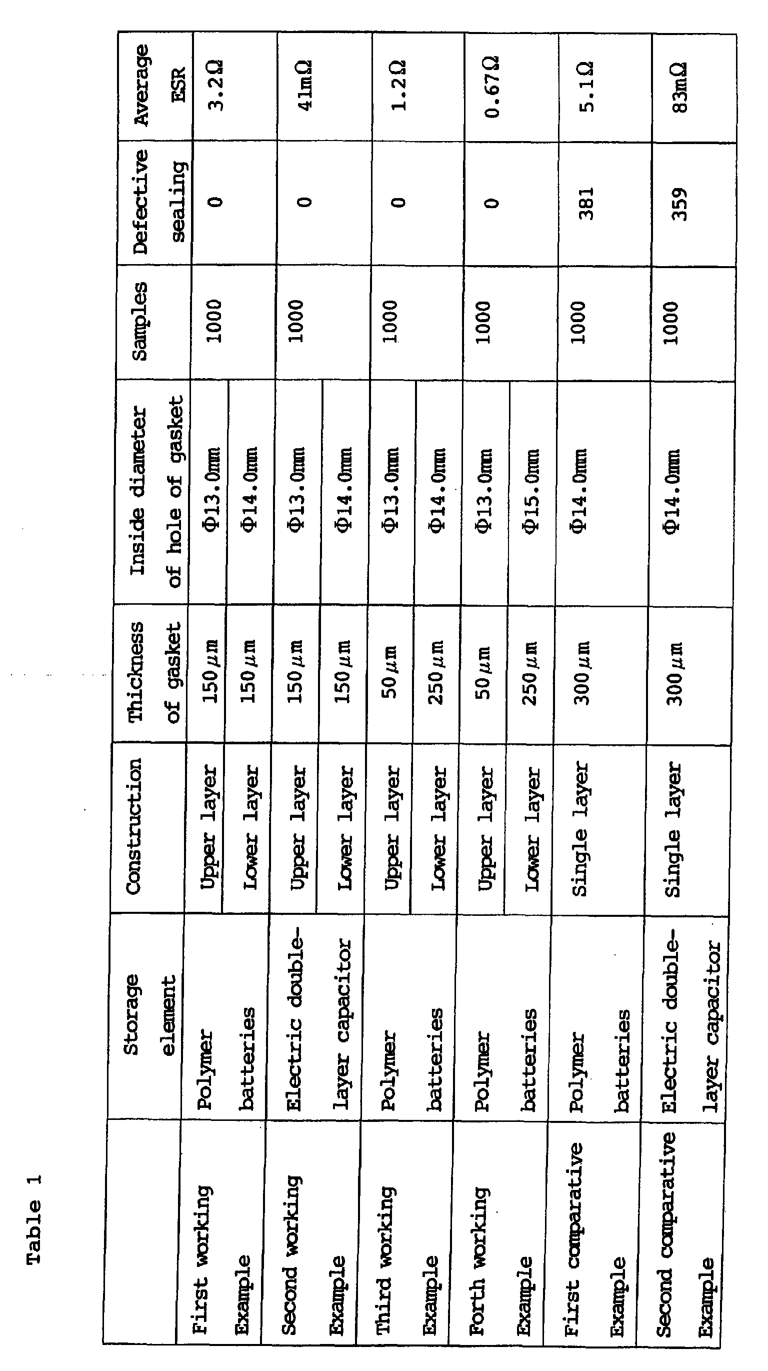

Comparative examples of the storage element were fabricated to compare with that of the present invention. The comparative examples will be explained below.

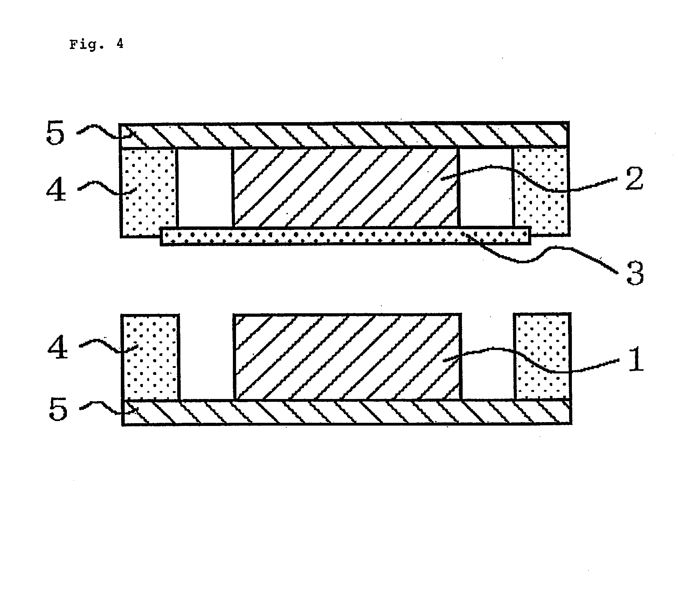

The internal construction of the basic cell of the first comparative example of a battery is shown in FIG. 4. This basic cell is composed of: electrodes 1 and 2; micro porous separator 3 that is positioned between electrodes 1 and 2; gaskets 4 for holding each of electrodes 1 and 2; and collector plates 5 that are arranged on the outer sides, i.e., the sides opposite separator 3, of each of electrodes 1 and 2. The storage element of this comparative example is a battery, and the two electrodes 1 and 2 are a positive electrode and a negative electrode.

In the battery of the first comparative example, gaskets 4 are of a single-layer construction and not of a two-layer construction. The thickness of gaskets 4 is 300 µm and the inside diameter of the holes is 14.0 mm. The battery of the first comparative example is otherwise the same as the construction of the first working example. In other words, electrodes 1 and 2 are arranged inside two cylindrical gaskets 4 and confront each other through interposed separator 3. Collector plates 5 are bonded by thermal fusion to the sides of gaskets 4 that are opposite separator 3 and electrolytic solution is injected. Two gaskets 4 are then bonded together by thermal fusion.

In the first comparative example as well as the first working example, 1000 batteries were fabricated, the number of instances of defective sealing was counted, and the ESR was measured for each storage element without sealing defects. As shown in Table 1, the results show that 381 sealing defects occurred in 1000 samples, and an average value of ESR was 5.1 Ω.

As compared with the first working example, the number of instances of defective sealing in the first comparative example was 381 of 1000 samples, while the first working example had no instances of defective sealing. It can thus be seen that the battery of the first working example enabled a prevention of the occurrence of sealing defects. This prevention of sealing defects is achieved through the use of gaskets 41 and 42 of two-layer construction in the first working example in which upper-layer (separator-side) gaskets 413 and 423 were formed with a thickness of 150 µm and having a hole with an inside diameter of 13.0 mm and in which lower-layer (collector plate-side) gaskets 415 and 425 were formed with a thickness of 150 µm and having a hole with an inside diameter of 14.0 mm, whereby the surface area of fusion was substantially increased, and moreover, the adherence of electrolytic solution to the area of fusion was eliminated because the inside diameter of the hole in the upper layer was smaller than the inside diameter of the hole in the lower layer. The average value of ESR of the first comparative example was 5.1 Ω , while the average value of ESR of the first working example was 3.2 Ω. These improvements were achieved because electrodes 1 and 2 were firmly secured in the inner circumferences of the holes in separator-side gaskets 413 and 423, whereby shifting in the relative positions of the two electrodes 1 and 2 was prevented.

Explanation next regards the second working example of the storage element of the present invention. In the second working example, an electric double-layer capacitor was constructed by using activated carbon as electrodes 1 and 2. The construction was otherwise the same as the first working example and redundant explanation regarding the other elements of this working example is therefore here omitted.

A count of the number of instances of defective sealing and a measurement of the ESR in the electric double-layer capacitor of the second embodiment showed that no instances of defective sealing occurred in 1000 samples, and the average ESR value was 41 mΩ.

Also in the second comparative example, the electric double-layer capacitor was constructed by using activated carbon as electrodes 1 and 2. The construction was otherwise the same as the first comparative example, and redundant explanation is here omitted.

A count of the number of instances of defective sealing and a measurement of the ESR in the electric double-layer capacitor of the second comparative example showed that 359 instances of defective sealing occurred in 1000 samples and the average ESR value was 83 mΩ .

As compared with the second comparative example, defective sealing can be prevented in the double-layer capacitor of the second working example. In addition, the average ESR value in the second working example was far lower than in the second comparative example. These improvements were achieved because electrodes 1 and 2 were firmly secured by the inner circumferences of the holes in separator-side gaskets 413 and 423 and shifting in the relative positions of the two electrodes 1 and 2 was therefore prevented.

In the third working example, upper-layer (separator-side) gaskets 413 and 423 of gaskets 41 and 42 of two-layer construction were formed with a thickness of 50 µm and with holes having an inside diameter of 13.0 mm, and lower-layer (collector plate-side) gaskets 415 and 425 of gaskets 41 and 42 of two-layer construction were formed with a thickness of 250 µm with holes having an inside diameter of 14.0 mm. The construction was otherwise the same as the first working example and redundant explanation is therefore here omitted.

As shown in Table 1, a count of the number of instances of defective sealing and measurement of ESR in the polymer batteries of the third working example showed that no instance of defective sealing occurred in 1000 samples, and the average ESR value was 1.2 Ω. As compared with the first working example, a far lower ESR value was obtained due to the increase in electrolytic solution inside the cells.

In the fourth working example, lower-layer (collector plate-side) gaskets 415 and 425 were formed with a thickness of 250 µm and having holes with an inside diameter of 15.0 mm. The construction was otherwise the same as the third working example, and redundant explanation is therefore here omitted.

As shown in Table 1, a count of the number of instances of defective sealing and measurement of ESR in the polymer batteries of the fourth working example showed that no instance of defective sealing occurred in 1000 samples, and the average ESR value was 0.6 Ω, which was lower than that in the third working example. This improvement was obtained due to the increase in the amount of electrolytic solution in the cell in addition to the firm securing of electrodes 1 and 2 as in the above-described working examples.

The present invention is of course not limited to the above-described working examples. For example, although polyquinoxaline was used as the negative electrode active material, polycyanoindole was used as the positive electrode active material, and sulfuric acid aqueous solution was used as the electrolytic solution in each of the working examples, the present invention is not limited to this form. Examples of materials that can be used as the positive electrode active material include macromolecular materials, low molecular-weight materials, inorganic materials, metal materials, and the like. Examples of conductive materials that can be used as the conductive supplement include crystalline carbon, carbon black, graphite, and the like. Although polyvinylidene fluoride was used as the binder resin in each of the working examples, the present invention is not limited to this form, and any of various resins may be used as long as the resin is not corrosive to the electrolytic solution.

Any ratio of constituent materials of the electrodes may be adopted, but considering efficiency, the active material is preferably within the range 30-95 wt %, the conductive supplements is preferably within the range 5-50 wt %, and the binder is preferably within the range 0-20 wt %.

Although an ionomer was used as the material for the gaskets in each of the working examples, the present invention is not limited to this form. Examples of materials that can be used as the gasket material include butyl rubber, polypropylene resin, ABS resin, and the like. In addition, the inside diameter of the holes in the separator-side gaskets 413 and 423 in each of the above-described working examples was for a case in which the outside diameter of the electrode was 13.0 mm, and the inside diameter of the holes in separator-side gaskets 413 and 423 is preferably within the range 13.0-13.2 mm to facilitate mounting of electrodes 1 and 2.

A variety of materials may be used as the separator as long as the material has an electrically insulative property and ion conductivity. Examples of materials that can be used as the electrolytic solution include acidic aqueous solutions, alkaline aqueous solutions, organic solvents, and the like.

While a preferred embodiment of the present invention has been described using specific terms, such description is for illustrative purposes only, and it is to be understood that changes and variations may be made without departing from the scope of the following claims.

## Claims

1. A storage element, comprising:
a pair of electrodes arranged to confront each other;
separator means interposed between confronting surfaces of the electrodes;
a pair of collector plates arranged to connect to surfaces of the pair of electrodes respectively which surfaces are the opposite of said confronting surfaces; and
gasket means having openings within which the electrodes can form a close fit, wherein the inner dimension of the openings on the side of the gasket means adjacent the separator is less than the inner dimension of the openings on the side of the gasket means adjacent the collector plate.

2. A storage element according to Claim 1, wherein the inner dimension of the openings on the side of the gasket means adjacent the separator are substantially the same as the outer dimension of the said electrodes.

3. A storage element according to Claim 1 or 2, wherein each gasket means is formed of two-layers comprising a separator-side gasket layer and a collector plate-side gasket layer.

4. A storage element according to Claim 3, wherein the two layers are laminated together as a single unit.

5. A storage element according to any one or more of Claims 1 to 4, and arranged to form a secondary battery; wherein one of the electrodes comprises a positive electrode and the other of the electrodes comprises a negative electrode.

6. A storage element according to any one or more of Claims 1 to 4, and arranged as an electric double-layer capacitor.

7. A storage element according to any one or more of Claims 1 to 6, wherein the different inner dimension of the openings in the gasket means serve to define chambers.

8. A storage element according to any one or more of Claims 1 to 7, wherein the said electrodes comprise solid electrodes.

9. A method of fabricating a storage element, comprising the steps of:
providing gasket means with means defining an opening having a region with inner dimension arranged for a close fit of an electrode therein, and a further region having a larger inner dimension than that of the aforesaid region;
arranging each of a pair of electrodes inside respective gasket means and connecting one surface of each of the electrodes to a respective collector plate; and
locating the gasket means together such that the other surface of each of the electrodes is arranged to confront each other through an interposed separator.

10. A method according to Claim 9, and including the step of:
laminating together as single units separator-side gaskets, which each have an opening with an inside dimension of substantially the same size as the outside dimension of solid electrodes, with collector plate-side gaskets, which each have an opening with an inside dimension that is larger than the inside dimension of the hole of said separator-side gasket, to thereby form a pair of gaskets of multiple-layer construction.
